# EUROPÄISCHE PATENTSCHRIFT

(11) **EP 2 509 472 B1**
(45) Veröffentlichungstag und Bekanntmachung des Hinweises auf die Patenterteilung: **18.02.2015**
(21) Anmeldenummer: 10795938.9
(22) Anmeldetag: 08.12.2010
(51) Int. Cl.: A47J 27/08, A47J 45/06

(54) **DECKEL FÜR EINEN SCHNELLKOCHTOPF**
LID FOR A PRESSURE COOKER
COUVERCLE POUR UN AUTOCUISEUR

(30) Priorität: 09.12.2009 DE 102009047733
(43) Veröffentlichungstag der Anmeldung: 17.10.2012
(73) Patentinhaber: Silit-Werke GmbH & Co. KG, 88499 Riedlingen (DE)
(72) Erfinder: GRÖZINGER, Roland, 88471 Laupheim (DE); WONTKE, Karl-Heinz, 88422 Bad Buchbach (DE); SCHOBLOCH, Jochen, 88422 Bad Buchau (DE)
(74) Vertreter: Grünecker, Kinkeldey, Stockmair & Schwanhäusser
(86) Internationale Anmeldenummer: PCT/EP2010/007469
(87) Internationale Veröffentlichungsnummer: WO 2011/069649

(56) Entgegenhaltungen:
- EP-A1- 1 745 730
- WO-A2-01/76428
- DE-A1- 3 004 088

## Beschreibung

Die Erfindung betrifft einen Deckel für einen Schnellkochtopf gemäß dem Oberbegriff des Anspruchs 1.

Ein solcher Deckel ist bereits aus der DE 30 04 088 A1 bekannt. In dieser Druckschrift weist der Schnellkochtopfdeckel einen Griff auf, der am Deckel befestigt ist, wobei der Griff aus duroplastischem Kunststoff gefertigt ist. Der Griff kann eine Elektronikeinheit aufweisen, die im Kunststoff eingegossen ist. Der Griff weist weiter einen Griffdeckel auf, der Durchbrechungen hat, um Anzeigen sichtbar zu machen. Der Griff weist Verstellräder und eine nicht bewegliche Druckanzeige auf.

Herkömmliche Schnellkochtöpfe weisen Deckel auf, die insbesondere über einen Bajonettverschluss mit dem Topfunterteil verbunden sind. Die Deckel weisen dabei zur Handhabung einen Griff, insbesondere einen Deckelstielgriff, auf, wobei in den meisten Griffen bereits eine Einstelleinrichtung zum Wählen unterschiedlicher Garstufen und eine Anzeige für den Druckbereich im Topf vorgesehen ist. Ein solcher Deckel hat auch bestimmte Funktionselemente für das Funktionieren des Schnellkochtopfes, wie beispielsweise die zuvor genannte Druckanzeigeinrichtung, ein Arbeitsventil, ein Sicherheitsventil, die zuvor genannte Einrichtung zum Einstellen der Garstufen, etc. Dabei sind bei den bekannten Deckeln die Funktionselemente von innen im Topfdeckel befestigt und/oder sind fester Bestandteil des Griffes. Das bedeutet jedoch, dass für einen Deckel das Design des Deckelgriffes festgelegt ist, und bei einem unterschiedlichen Designwunsch, beziehungsweise unterschiedliche Varianten die komplette Einheit ausgetauscht und neu konzipiert werden muss.

Hiervon ausgehend liegt der vorliegenden Erfindung die Aufgabe zugrunde, einen Deckel für einen Schnellkochtopf bereitzustellen, der einen Deckelgriff aufweist, dessen Design einfach und kostengünstig, insbesondere für unterschiedliche Serien, geändert werden kann, derart dass Produktionskosten eingespart werden können und eine entsprechende Designvielfalt gegeben ist.

Erfindungsgemäß wird diese Aufgabe durch die Merkmale des Anspruchs 1 gelöst.

Gemäß der vorliegenden Erfindung weist der Deckelgriff, der insbesondere als Deckstielgriff ausgebildet ist, ein Technikmodul auf, das für die Funktionen des Schnellkochtopfes erforderliche, bewegliche Funktionselemente aufweist. D.h., dass diese beweglichen Funktionselemente in dem Technikmodul integriert und gehalten sind, während das Abdeckmodul das Technikmodul ausschließlich nach außen verkleidet und keine für die Funktion des Schnellkochtopfes notwendigen Funktionselemente aufweist. Der modulare Aufbau des Deckelgriffs erlaubt eine große Variantenvielfalt, da das Abdeckmodul nur die Funktion eines verkleidenden Elementes hat und auf einfache Art und Weise ausgetauscht werden kann. Dadurch, dass beispielsweise das Technikmodul für unterschiedliche Schnellkochtopfvarianten verwendet werden kann, wobei lediglich ein entsprechendes Abdeckmodul gewählt wird, vergünstigt und vereinfacht sich die Produktion unterschiedlicher Schnellkochtopfvarianten erheblich. Ist das Abdeckmodul vom Technikmodul abnehmbar, ist es auch möglich, dass nachträglich vom Kunden das Abdeckmodul ausgetauscht wird, wobei dann das neue Abdeckmodul beispielsweise eine andere Form und/oder eine andere Farbe aufweist.

Dadurch, dass das der Deckelgriff vom Schnellkochtopf abnehmbar ist, können die Funktionselemente im Technikmodul einfach gereinigt und gewartet werden.

Das Technikmodul weist mindestens ein Funktionselement der folgenden Gruppe auf: eine Druckanzeigeeinrichtung, eine Deckelverriegelung, ein bewegliches Dichtelement eines Arbeitsventils, eine Druckfeder, insbesondere Drehstabfeder, die das bewegliche Dichtelement mit einer verstellbaren Druckkraft beaufschlagt und eine Einstelleinrichtung zum Verändern der Druckkraft der Feder auf das Dichtelement.

Wenn diese Elemente in dem abnehmbaren Deckelgriff untergebracht sind, kann der Deckelgriff abgenommen werden und der verbleibende Metalldeckel zu Reinigungszwecken beispielsweise auch in den Geschirrspüler gegeben werden, was die Handhabung und Hygiene wesentlich verbessert. Die Produktionskosten des Metalldeckels verringern sich dabei auch wesentlich.

Das Technikmodul weist eine Befestigungseinrichtung zum Befestigen des Deckelgriffs am Deckel auf. Das bedeutet, dass das Technikmodul einerseits die Funktionsteile hält und andererseits auch das mechanisch tragende Teil des Griffs ist. Das bedeutet, dass der Deckel zusammen mit dem Technikmodul funktionieren würde, auch wenn kein Abdeckmodul vorgesehen wäre.

Dazu ist das Technikmodul im Wesentlichen aus einem L-förmigen Trägerelement, vorzugsweise Trägerblech, ausgebildet. Ein solches L-förmiges Trägerelement ist einfach und kostengünstig zu fertigen und kann seitlich und oberhalb des metallischen Deckelements in stabiler Art und Weise angeordnet werden und somit Funktionselemente tragen die an der Oberseite des metallischen Deckels angeordnet werden müssen, wie beispielsweise Arbeitsventil oder Druckanzeige, aber auch Funktionselemente, die von der Seite des metallischen Deckelelements ihre Funktion ausüben, wie beispielsweise die Deckelverriegelung.

Wenn das Technikmodul das bewegliche Dichtelement des Arbeitsventils aufweist, ist der Ventilsitz im Deckel als separates oder angeformtes Ventilsitzteil ausgebildet. D.h., dass in geschickter Art und Weise ein Teil, nämlich das bewegliche Funktionsteil des Arbeitsventils, im Technikmodul integriert ist während der Ventilsitz im Deckel ausgebildet ist. Eine solche Anordnung kann kostengünstig gefertigt werden und ermöglicht darüber hinaus auch eine sehr gute Reinigung des Ventilsitzes, der freigelegt wird, wenn der Deckelgriff abgenommen wird.

Der Ventilsitz und/oder das Dichtelement sind aus einem Feststoff, z. B. einem Harz, Thermoplast, wie z. B. PEEK, oder Duroplast gebildet. PEEK ist ein tiefkristalliner, leicht verarbeitbarer Thermoplast, der sich sowohl durch hohe Zug- und Biegefestigkeit, Schlagzähigkeit und konstant gute elektrische Eigenschaften von 0 °C bis 220 °C, als auch durch günstiges Gleit- und Verschleißverhalten und schwere Entflammbarkeit auszeichnet.

Vorteilhafterweise ist der Ventilsitz und/oder das Dichtelement aus Metall gebildet. Der Ventilsitz ist insbesondere konusförmig ausgebildet. Ganz besonders vorteilhaft ist es, wenn das Dichtelement eine kugelförmige Dichtfläche aufweist, d.h., dass das Dichtelement zumindest einen Abschnitt aufweist, der eine entsprechende kugelförmige Oberfläche hat, die dann auf dem konusförmigen Ventilsitzteil aufsitzt. Es ist auch möglich, dass der Ventilsitz eine kugelförmige Dichtfläche und das Dichtelement eine konusförmige Dichtfläche aufweist.

Ein solches Ventil erlaubt ein verbessertes Ansprechverhalten des Arbeitsventils. Dabei können Toleranzen von < +/- 20 kPa (< +/- 0,2 bar) sicher eingehalten werden. D.h., dass nur ein kleiner Differenzdruck vom Ansprech- bis zum Stabilisierungsdruck notwendig ist.

Vorteilhafterweise ist das Abdeckmodul ein Kunststoffteil, das an seiner Oberseite mindestens zwei Öffnungen, beispielsweise für die Druckanzeigeeinrichtung und die Einstelleinrichtung zum Verändern der Druckkraft auf die Feder, aufweist. Somit kann das Abdeckmodul sehr kostengünstig als Spritzgussteil hergestellt werden. Das Abdeckmodul weist dann noch Befestigungselemente auf, mit dem es am Technikmodul beispielsweise festgeklippt werden kann oder in dem Technikmodul einrasten kann. Vorteilhaft ist eine Verbindung durch ein Schlüssel-/Schlosssystem realisiert.

Gemäß einem bevorzugten Ausführungsbeispiel ist die Einstelleinrichtung zum Verändern der Druckkraft auf das Dichtelement so ausgebildet, dass sie einen Drehmechanismus umfasst, wobei insbesondere in Abhängigkeit der Drehbewegung, d.h., der Position des Drehmechanismus, ein Ende der Drehstabfeder mit einer vorbestimmten Kraft beaufschlagt wird, derart dass eine bestimmte Kraft von dem anderen Ende direkt oder indirekt auf das Dichtelement ausgeübt wird.

Vorteilhafterweise wird ein Drehknopf auf den Drehmechanismus aufgesetzt. Der Drehknopf kann auch erst nachdem das Abdeckmodul bereits mit dem Technikmodul verbunden worden ist von oben auf den Drehmechanismus aufgesetzt werden. Somit kann eine Druckeinstellung, d.h. eine Wahl der Garstufen (zum Bespiel Garstufe I oder II) via leichtgängigem, rastendem Drehknopf bewerkstelligt werden. Neben gutem Aussehen ermöglicht ein solcher Drehknopf auch eine einfach Handhabung. Dadurch, dass der Drehknopf in Positionen verdreht werden kann - die den verschiedenen Garstufen (zum Beispiel Garstufe I oder II) entsprechen oder aber einer Position zum Abdampfen und/oder Öffnen des Topfes - kann der Bediener sicher die einzelnen Positionen wählen.

Obwohl vorzugsweise alle Funktionselemente im Technikmodul integriert sind, ist gemäß einer weiteren Ausführungsform ein Sicherheitsventil in Form eines selbstreversierenden Überdruckventils direkt im Topfdeckel, d.h. im metallischen Deckelement vorgesehen. Wenn das Sicherheitsventil direkt im Deckelelement vorgesehen ist, ist eine große Sicherheit gewährleistet.

Gemäß einer bevorzugten Ausführungsform ist um einen Bereich um das Überdruckventil ein Dichtelement vorgesehen, das die Deckeloberseite gegen das Technikmodul, insbesondere das L-förmige Trägerelement abdichtet, und eine Öffnung aufweist, über die aus dem Überdruckventil austretender Dampf in eine seitliche Richtung und/oder nach vorne abgeleitet werden kann. Somit kann sichergestellt werden, dass Dampf, der aus dem Überdruckventil austritt, nicht unkontrolliert nach oben, zum Beispiel in Richtung des Technikmoduls austreten kann oder aber unkontrolliert nach hinten, d.h. in Richtung der Hand des Benutzers. Somit kann eine Verbrennungsgefahr verhindert werden. "Vorne" bedeutet hier in eine Richtung, die von der Seite, an der der Griff befestigt ist, weg weist beziehungsweise eine Richtung, die zur Mitte des Deckels gerichtet ist.

Bei einem System für unterschiedliche Schnellkochtopfvarianten kann jeweils ein und dasselbe Technikmodul vorgesehen sein, wobei sich lediglich für unterschiedliche Varianten das entsprechende Abdeckmodul unterscheidet und eine unterschiedliche Form und/oder Farbe aufweist.

Die nachfolgende Erfindung wird im folgenden unter Bezugnahme der beigefügten Figuren näher erläutert.
- Figur 1: zeigt ein Aufsicht auf einen Deckel gemäß der vorliegenden Erfindung.
- Figur 2: zeigt eine Seitenansicht des in Figur 1 gezeigten Deckels.
- Figur 3: zeigt einen Schnitt entlang der Linie I-I in Figur 1.
- Figur 4: zeigt eine perspektivische Darstellung des Abdeckmoduls.
- Figur 5: zeigt eine perspektivische Darstellung des Technikmoduls mit aufgesetzten Drehknopf.
- Figur 6: zeigt in perspektivischer Darstellung das Technikmodul mit abgenommenen Drehknopf und abgenommener Druckanzeigekappe.
- Figur 7: zeigt eine Teilexplosionsdarstellung des Deckelstielgriffs gemäß der vorliegenden Erfindung.
- Figur 8: zeigt eine perspektivische Darstellung des in das Deckelelement eingebauten Technikmoduls.
- Figur 9: zeigt einen Schnitt entlang der Linie II-II in Figur 1.
- Figur 10: zeigt in perspektivischer Schnittdarstellung das Technikmodul mit aufgesetztem Drehknopf.
- Figur 11: zeigt eine Teilexplosionsdarstellung eines Deckelstilgriffes gemäß einer weiteren Ausführungsform der vorliegenden Erfindung.

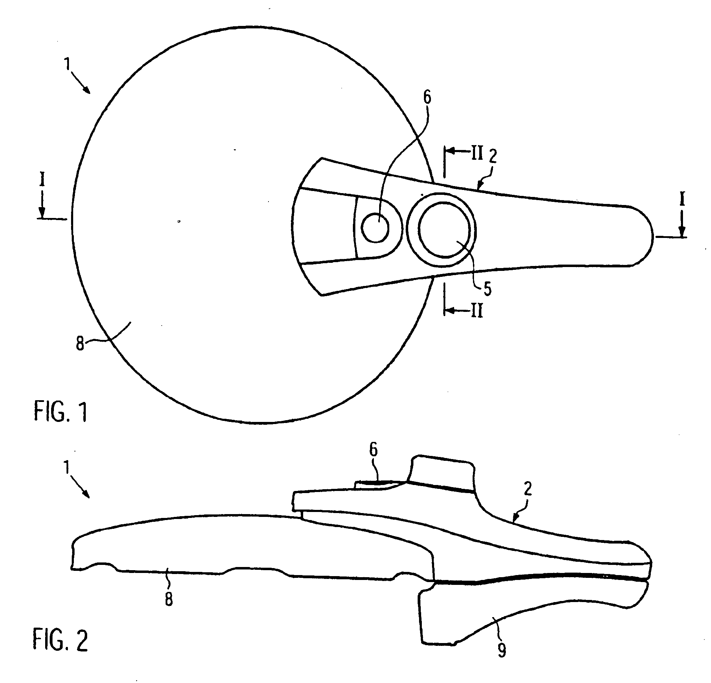

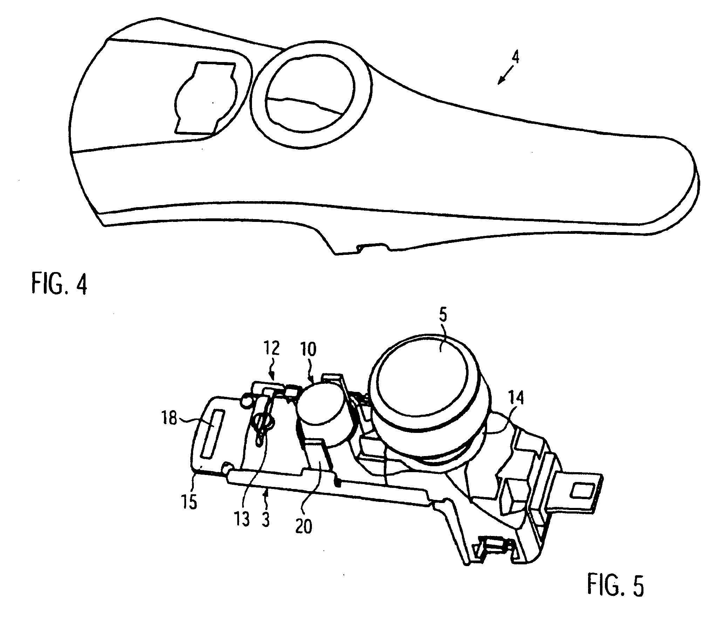

Figur 1 zeigt eine Aufsicht auf einen Deckel 1 gemäß der vorliegenden Erfindung und Figur 2 zeigt eine Seitenansicht dieses Deckels. Der Deckel 1 für einen Schnellkochtopf (nicht dargestellt) weist einen abnehmbaren Deckelgriff 2, hier in Form eines Deckelstielgriffs 2 auf. Auch wenn die Erfindung nachfolgend beispielhaft in Zusammenhang mit einem Deckelstielgriff beschrieben wird, ist die Erfindung jedoch gleichermaßen auch für andere Griffarten wie Stummelgriffe, Bügelgriffe, etc. geeignet. Der Deckelstielgriff 2 ist dabei so angeordnet, dass er einen bestimmten Abschnitt der Oberfläche des Deckelelements 8 sowie einen daran angrenzenden Seitenbereich umgibt. In geschlossenem Zustand kommt der Deckelstielgriff 2 oberhalb eines Stielgriffs 9, der mit dem Topf verbunden ist, zu liegen, so dass der Topf in geschlossenem Zustand an den Stielgriffen 9 und 2 gefasst werden kann. Der Deckelstielgriff 2 ragt dazu über das Deckelelement 8 über die Außenkontur des Topfes seitlich nach außen. Der Deckel, d.h. das Deckelelement 8 kann, wie allgemein bekannt, über einen Bajonettverschluss mit dem Topf verbunden werden. Wie insbesondere aus den Figuren 4 bis 6 hervorgeht, weist der Deckelstielgriff ein Technikmodul 3, sowie ein Abdeckmodul 4, das das Technikmodul 3 verkleidet, auf, wobei das Abdeckmodul 4 auf das Technikmodul 3 aufsteckbar oder aufklippbar und insbesondere durch ein Schlüssel-/Schlosssystem verbunden ist.

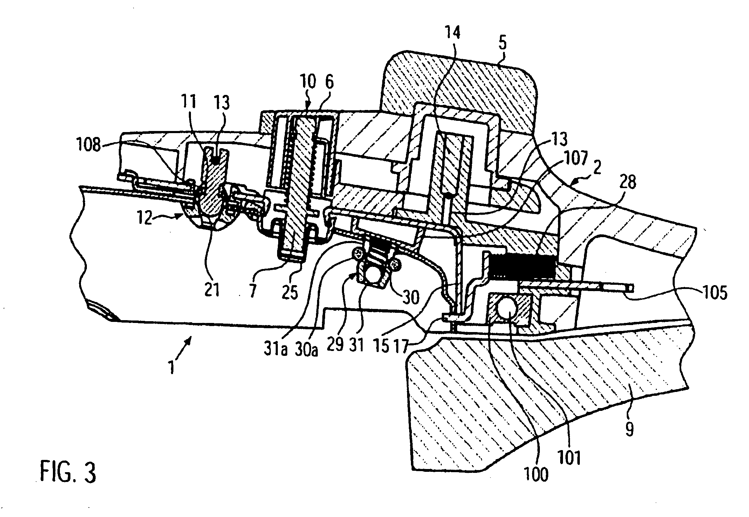

Das Technikmodul 3 umfasst für die Funktion des Schnellkochtopfes erforderliche bewegliche Funktionselemente. D.h., dass diese beweglichen Funktionselemente in dem Technikmodul 3 integriert und befestigt sind, während das Abdeckmodul 4 das Technikmodul 3 ausschließlich verkleidet und keine für die Funktion des Schnellkochtopfes notwendigen Funktionselemente aufweist. D.h., dass der Schnellkochtopf auch ohne ein montiertes Abdeckmodul 4 funktionieren würde. Bei diesem Ausführungsbeispiel umfasst, wie später auch noch näher erläutert wird, das Technikmodul 3 folgende Funktionselemente: eine Druckanzeigeeinrichtung, die insgesamt mit 10 bezeichnet ist, und die den Druck, der im Topf herrscht anzeigt, ein bewegliches Dichtelement 11 eines Arbeitsventils, das insgesamt mit 12 bezeichnet ist, zum Einstellen unterschiedlicher Druckwerte im Schnellkochtopf, eine Druckfeder insbesondere eine Drehstabfeder 13, die das bewegliche Dichtelement 11 mit einer verstellbaren Druckkraft beaufschlagt, und eine Einstelleinrichtung 14 zum Verändern der Druckkraft der Feder auf das Dichtelement 11 des Arbeitsventils 12. Das Technikmodul 3 kann auch eine Deckelverriegelung 17 aufweisen (Figuren 3, 7 und 8).

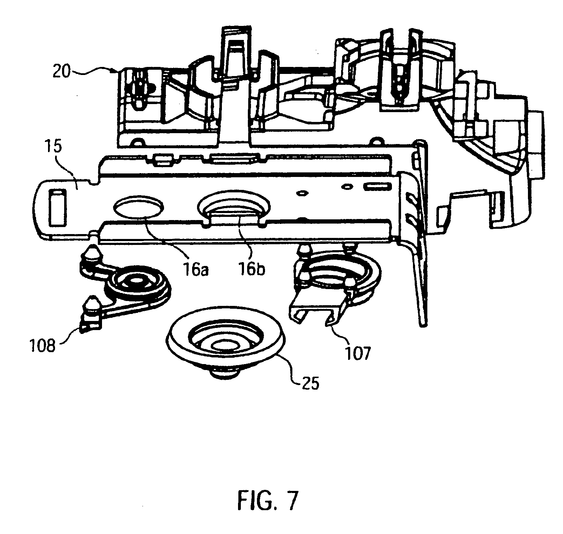

Das Technikmodul umfasst, wie insbesondere aus den Figuren 3, 5, 6 und Figur 7 hervorgeht, ein L-förmiges Trägerelement 15, das vorzugsweise aus Metall, insbesondere aus einem Trägerblech ausgebildet ist, das, wie insbesondere aus Figur 5 und 7 hervorgeht, an seiner Oberseite mindestens zwei Durchgangsöffnungen 16a ,16b für die Druckanzeigeeinrichtung 10 beziehungsweise das Arbeitsventil 12 aufweist. Das Technikmodul 3 beziehungsweise das L-förmige Trägerelement 15 nimmt einerseits die zuvor genannten Funktionselemente auf und ist andererseits auch das mechanisch tragende Teil des Deckelgriffs. Ein solches L-förmiges Trägerelement ist einfach und kostengünstig zu fertigen und kann seitlich und oberhalb des metallischen Deckelelements 8 in stabiler Art und Weise abnehmbar befestigt werden. Durch die L-Form können sowohl Funktionselemente angeordnet werden, die oben am metallischen Deckelelement 8 angeordnet werden müssen, wie beispielsweise Arbeitsventil 12 , Einstelleinrichtung 14 oder Druckanzeigeeinrichtung 10, aber auch Funktionselemente, die von der Seite des metallischen Deckelelements 8 ihre Funktion ausüben, wie beispielsweise eine Deckelverriegelung 17 (siehe Figur 3, 7 oder 8). Auf dem Trägerelement 15 beziehungsweise der Trägerplatte sind mindestens eine Kunststoffhalterung 20, insbesondere in Form eines Spritzgussteiles befestigt (zum Beispiel aufgeklippt), über die die einzelnen Funktionselemente gehalten werden können.

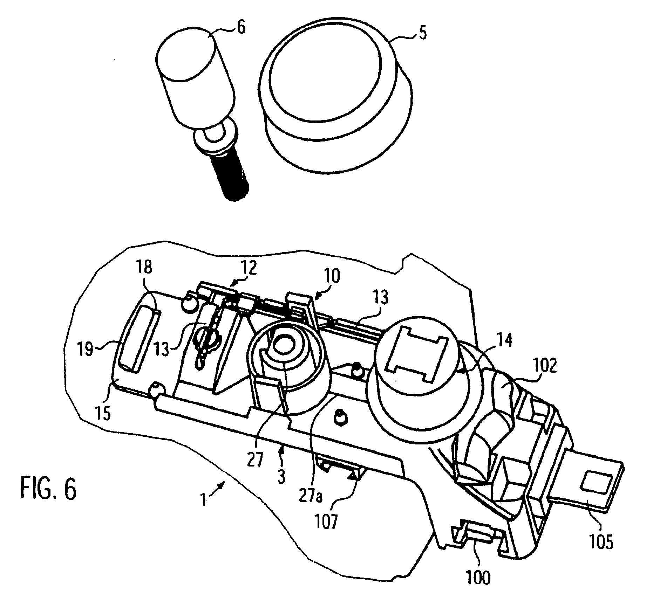

Das Technikmodul 3 weist eine Befestigungseinrichtung 18 auf (Figuren 5 und 6), die hier am vorderen Ende des L-förmigen Trägerelements 15, hier insbesondere als Öffnung, ausgebildet ist, die mit einem Vorsprung 19, beziehungsweise Haken an der Oberfläche des Deckelelements 8 in Eingriff gebracht werden kann. Ferner kann der Deckelstielgriff 2 über die Deckelverriegelung 17 am Deckelelement 8 befestigt werden, die sich vom Technikmodul 3 aus durch den seitlichen Bereich des Deckelelements 8 hindurch erstreckt (Figur 3). Das L-förmige Trägerelement 15 beziehungsweise die L-förmige Platte kann somit an der Oberseite des Deckelelements 8 eingehakt werden und dann über die Verriegelung 17, die in eine Öffnung im Seitenbereich des Deckelelements 8 eingebracht wird, befestigt werden. Diese Befestigungseinrichtung ist jedoch nur ein Beispiel, das Technikmodul an der Oberfläche des Deckels anzuordnen. Auf jeden Fall ist jedoch der Deckelstielgriff 2 abnehmbar befestigt.

Das Deckelelement 8 weist auch entsprechende Öffnungen auf, damit die unterschiedlichen Funktionselemente in das Deckelinnere ragen können.

Eines der beweglichen Funktionselemente ist das bewegliche Dichtelement 11 des Arbeitsventils 12.

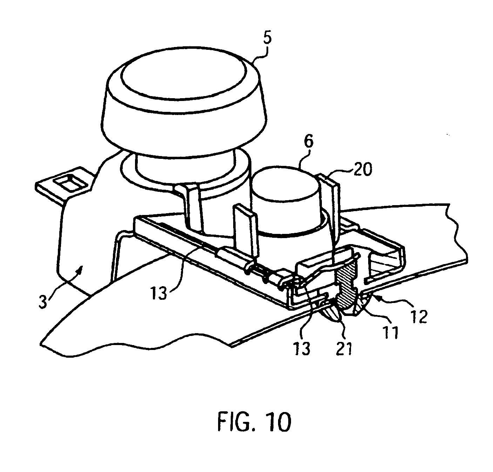

Wie insbesondere aus den Figuren 3, 8 und 10 hervorgeht, ist das bewegliche Dichtelement 11 eines Arbeitsventils 12 über die Halterung 20 des Technikmoduls 3, durch die Öffnung 16a auf- und abbeweglich im Technikmodul angeordnet. Das Dichtelement 11 weist hier eine kugelförmige Dichtfläche auf, d.h. zumindest einen kugelförmigen Dichtabschnitt, der auf einem Ventilsitz 21 (Figur 3) aufsitzt. Die Drehstabfeder 13 kann in Abhängigkeit einer Einstelleinrichtung 14 zum Verändern der Druckkraft der Feder das Dichtelement 11 mit einer Druckkraft beaufschlagen. Hier wird die Feder 13 in einer Nut an der Oberseite des Dichtelements 11 angeordnet. Über die zuvor genannte Einstelleinrichtung kann, wie später noch genauer erläutert wird, eine bestimmte Druckkraft entsprechend einer Garstufe gewählt werden. Es können also unterschiedliche Druckbereiche im Topf eingestellt werden, die zum Beispiel einer Garstufe I und einer Schnellstufe II entsprechen. Dabei hat das Arbeitsventil 12 eine Druckbegrenzungsfunktion. Bei Übersteigung des Drucks einer bestimmten Garstufe wird das Dichtelement 11 nach oben gedrückt, so dass sich das Arbeitsventil öffnet und Dampf aus dem Topf entweichen kann. Die Garstufe I entspricht beispielsweise einem Druck in einem Bereich von 0,4 bar (40 kPa) und die Garstufe II beispielsweise einem Druck vom 0,8 bar (80 kPa). Der Ventilsitz 21 des Arbeitsventils 12 ist im Deckel 1 beziehungsweise im Deckelelement 8 als separates oder angeformtes Ventilsitzteil 21 ausgebildet. Dabei wird das Ventilsitzteil beispielsweise vom Inneren des Deckelelements 8 durch eine entsprechende Öffnung 1 geführt und eingebördelt. Es kann jedoch auch ein separates Ventilsitzteil vorgesehen sein, das mit Hilfe eines Dichtelements in die Öffnung des Deckelelements eingepasst wird. Das Dichtelement weist dazu beispielsweise eine umlaufende Ringnut auf, in der der Rand der Öffnung des Deckelelements zu liegen kommt.

Vorteilhafterweise ist der Ventilsitz aus Metall und insbesondere konusförmig ausgebildet. Der Winkel unter dem die konisch ausgebildete Dichtfläche auseinander läuft beträgt vorzugsweise 30° bis 40°, noch bevorzugter 33° bis 37° und insbesondere 35°.

Mit einem solchen Ventil kann ein verbessertes Ansprechverhalten des Arbeitsventils 12 erreicht werden. Dabei können Toleranzen von < +/- 20 kPa (< +/- 0,2 bar) sicher eingehalten werden. D.h., dass nur ein kleiner Differenzdruck vom Ansprech- bis zum Stabilisierungsdruck notwendig ist.

Wie insbesondere aus Figuren 7 und 3 hervorgeht, ist im Bereich des Arbeitsventils eine Dichtmanschette 108 vorgesehen, die unten am Technikmodul 3, hier am L-förmigen Trägerelement, angeordnet ist. Die Dichtmanschette 108 ist in einem Bereich um das Arbeitsventil 12 herum angeordnet, derart, dass das bewegliche Dichtelement 11 durch eine Öffnung in der Dichtmanschette durchgeführt werden kann, so dass in diesem Ausführungsbeispiel die ringförmige Nut des Dichtelements 11 in der Öffnung der Dichtmanschette zu liegen kommt. Die Dichtmanschette 108 dichtet um das Arbeitsventil herum die Deckeloberseite gegen den Griff, d.h. hier das Technikmodul 3, beziehungsweise das Trägerelement 15, ab. Die Dichtmanschette weist eine gerichtete Öffnung auf, über die Dampf, der aus dem Arbeitsventil austritt, gezielt nach vorne abgeleitet werden kann. Die Öffnung könnte auch alternativ oder zusätzlich zur Seite gerichtet sein. So wird verhindert, dass der Dampf unkontrolliert nach oben zum Beispiel in das Technikmodul oder nach hinten in Richtung der Hand des Bedieners austritt. Der Dampf kann dann in Richtung nach vorne zwischen Abdeckmodul 4 und Deckel gezielt abgeleitet werden.

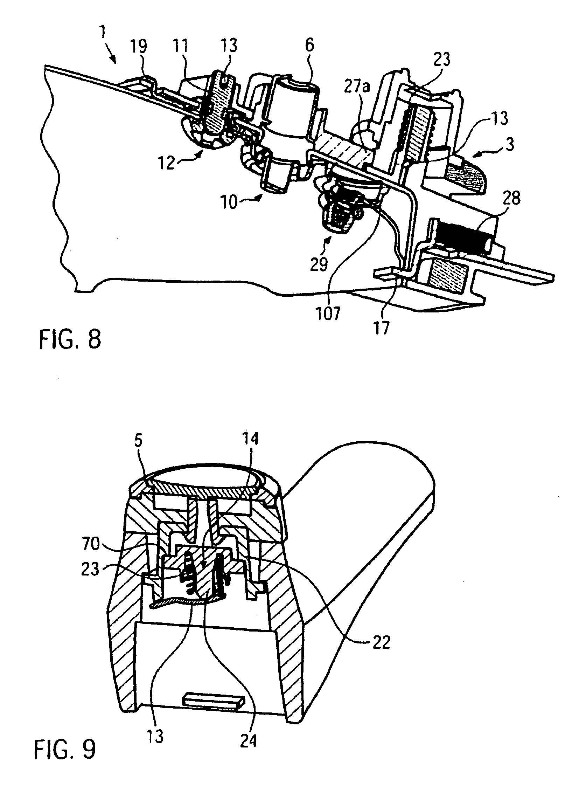

Die Drehstabfeder 13, die auf dem Dichtelement 11 aufliegt, macht, wie insbesondere aus Figur 6 und 9 hervorgeht, einen Knick und verläuft entlang des L-förmigen Trägerelementes 15 hin zu einer Einstelleinrichtung 14, die die Druckkraft, mit der die Feder 13 auf das Dichtelement 11 drückt, verändern kann. Bei dieser Ausführungsform wird eine Drehstabfeder verwendet. Das gegenüberliegende Ende der Drehstabfeder 13 wird dabei, wie insbesondere aus Figur 9 hervorgeht, mit einer Kraft beaufschlagt. Hier umfasst die Einstelleinrichtung 14 einen Drehmechanismus 22, der insbesondere in Abhängigkeit der Drehbewegung das Ende der Drehstabfeder 13 mit einer vorbestimmten Kraft beaufschlagt, derart, dass eine bestimmte Kraft von dem anderen Ende der Drehstabfeder auf das Dichtelement 11 ausgeübt wird, wobei diese Kraft einem bestimmten gewünschten Druck im Topf entspricht. Durch Drehen des Drehmechanismus 22 wird entgegen der Federkraft der Feder 23 über das sich nach unten oder oben bewegende Druckelement 24 eine entsprechende Kraft auf die Drehstabfeder 13 ausgeübt. Zum Betätigen des Drehmechanismus 22 ist in einer Öffnung am oberen Ende ein Drehknopf 5 befestigt, der die Drehbewegung auf den Drehmechanismus 22 überträgt. Hierbei erfolgt die Druckeinstellung also via dem leichtgängigen, rastenden Drehknopf 5 , indem durch eine Kurve 70 im Teil 22 das Druckelement 24 die Drehstabfeder 13 vorspannt. Das Druckelement 24, beziehungsweise dessen Vorsprünge, die in der Kurve geführt werden, können dabei in zusätzliche Vertiefungen, die in der Kurve ausgebildet sind, einrasten. Die Drehbewegung kann jedoch auch stufenlos erfolgen. Der Drehknopf wird auf den Drehmechanismus 22 aufgesetzt, nachdem bereits das Abdeckmodul 4 auf das Technikmodul 3 aufgebracht wurde. Die volle Funktion des Technikmoduls 3 wäre jedoch auch ohne dem Abdeckmodul 4 gewährleistet.

Wenn in der Figur 6, die die Einstelleinrichtung 14 beziehungsweise den Drehmechanismus 22 mit abgenommenem Drehknopf 5 zeigt, auch nicht explizit dargestellt, kann der Drehknopf auf seiner Oberseite verschiedene Einstellmöglichkeiten wie: "Auf", "0", "1" und "2" aufweisen. "Auf" entspricht einer Einstellung, in der der Deckel entriegelt ist und geöffnet werden kann. "0" entspricht einer Einstellung, bei der kein Überdruck aufgebaut werden soll und bei der die Kraft, die auf das Dichtelement 11 wirkt, derart eingestellt ist, dass das Ventil 12 geöffnet ist. Die Positionen "1" und "2" entsprechen den zuvor genannten Garstufen I und II und den entsprechenden vorab festgelegten Druckbereichen.

Der Drehknopf umfasst hier eine Kappe. Die Kappe kann beispielsweise verchromt sein. Der Drehknopf ist mit dem Drehmechanismus 22 verbunden.

Wie insbesondere aus Figur 3 hervorgeht, liegt zwischen dem Arbeitsventil 12 und der Einstelleinrichtung 14 die Druckanzeigeeinrichtung 10, die den im Topf herrschenden Druck anzeigt. Wie insbesondere auch aus der Figur 3 hervorgeht, ist für die Druckanzeigeinrichtung 10 an deren unterem Ende eine Schutzmembran 25 vorgesehen, die vom Inneren des Topfdeckels 1 aus in der Öffnung 16b abdichtend befestigt ist. Die Druckanzeigewelle 7 ist auf- und abbeweglich in dem Teil 27 (Figur 6) in der Halterung 20 auf dem Trägerelement 15 gelagert. Oben auf der Druckanzeigewelle 7 ist die Druckanzeigekappe 6 befestigt. Die Feder 33 ist um die Welle 7 herum angeordnet und beaufschlagt die Welle mit einer bestimmten Federkraft nach unten. Wenn sich der Druck im geschlossenen Schnellkochtopf erhöht, wird die Druckanzeigewelle 7 bis zu einem Anschlag nach oben bewegt, wobei die Höhe, mit welcher die Druckanzeigekappe aus dem Griff hervorragt, ein Maß für den Druck im Topf ist.

Der Bediener kann auf Grund der Höhe, die die Druckanzeigekappe 6 aus dem Griff 2 hervorsteht, erkennen kann, wie hoch etwa der Druck im Topf ist. Ist der Druck zu hoch und öffnet das Arbeitsventil 12, hört der Bediener ein leichtes Zischen, was ihm anzeigt, dass die Temperatur reduziert werden muss, um in den gewünschten Druckbereich im Topf zu gelangen. Die Kappe 6 weist zum Erkennen der Druckstufen zum Beispiel zwei Ringe auf.

Als weiteres Funktionselement ist die Verriegelung 17 zu nennen, wie insbesondere aus den Figuren 3 und 8 hervorgeht. Die Deckelverriegelung, hier in Form eines Verriegelungsbleches 17, ragt durch eine Öffnung in den Deckel 1 beziehungsweise das Deckelelement 8, und wird durch die Feder 28 nach innen vorgespannt. Auch das Verriegelungselement 17 ist im Technikmodul 3, in einer entsprechenden auf dem L-förmigen Trägerelement 15 befestigten Halterung 20 gehalten.

Der Verriegelungsmechanismus Griff-Deckel funktioniert insbesondere wie folgt: Das Technikmodul 3 wird über das Trägerelement 15 an der Lasche 19 eingehängt. Durch Einschwenken in Rastposition wird die Verriegelung 17 gegen die Feder 28 gedrückt und rastet im Deckelelement 8 ein (Figuren 3 und 8). Wird der Deckel 1 auf das nicht dargestellte Topfunterteil über den Bajonettverschluss aufgesetzt, so kann über eine Verriegelungsbrücke durch Drehen am Drehknopf die Verriegelung 17 gesperrt werden, derart, dass der Griff 2 nicht vom Deckel 8 abgenommen werden kann. Dieser Mechanismus kann so realisiert sein, dass beim Aufsetzen des Deckels ein Verriegelungsteil 100 gegen eine Feder 101 verschoben wird. Wenn beide Griffe 2, 9 übereinander sind, kann durch Drehen am Drehknopf 5 die Verriegelungsbrücke 102 nach unten verschoben werden (Figuren 3 und 6)wodurch gleichzeitig ist Verriegelung 17 gesperrt wird. Der Griff 2 kann nicht vom Deckel 1 abgenommen werden.

Mit Hilfe des Bereichs 105, auf den ein nicht dargestellter Entriegelungsknopf angebracht sein kann, kann bei geöffnetem Topf das Verriegelungselement 17 gegen die Federkraft der Feder 28 nach hinten aus dem Deckel gezogen werden.

Obwohl vorzugsweise alle Funktionselemente im Technikmodul integriert sind, ist vorzugsweise ein Sicherheitsventil 29 in Form eines selbstreversierenden Überdruckventils 29, wie insbesondere aus den Figuren 3 und 8 hervorgeht, im Topfdeckel vorgesehen. Dazu weist das Deckelelement 8 eine entsprechende Öffnung auf. Das selbstreversierende Überdruckventil 29 hat die Funktion der Überdrucksicherung, der Entlüftungsautomatik sowie der Vakuumverhinderung. Das Ventil weist ein Ventilgehäuse auf, das eine Durchgangsöffnung hat. Das Ventilgehäuse ist vorzugsweise aus Metall, insbesondere poliertem Edelstahl, gebildet. Das Überdruckventil weist eine über die Feder 30 druckbeaufschlagte Kugel 31 auf. Die Durchgangsöffnung des Ventilgehäuses weist eine konische Fläche als Ventilsitz auf. Zum Abdichten liegt dabei die Kugel auf der konischen Fläche auf, wobei, wie auch beim Arbeitsventil, die Kugel auf der konischen Fläche aufliegt. Hier beträgt der Winkel, unter dem die konische Fläche auseinanderläuft, des Ventilsitzes vorzugsweise 30° bis 40° insbesondere 33° bis 37° und noch bevorzugter 35° auf. Das Überdruckventil 29 wird in eine Öffnung des Deckels 8 eingeschoben und weist im oberen Bereich einen umgebörtelten Rand auf, mit dem es auf dem Deckel aufsitzt. Weiter weist das Überdruckventil einen Dichtring 30a auf. Das Überdruckventil ist in der Öffnung im Topfdeckel auf- und abbewegbar. Im Gehäuse des Überdruckventils sind Öffnungen 31a vorgesehen, über die beim Erwärmen Luft aus dem Topf austreten kann. Bei weiterem Steigen des Überdrucks bewegt sich das Überdruckventil nach oben, so dass die Dichtung 30 den Topfdeckel abdichtet. Erst bei Erreichen eines Überdrucks, beispielsweise > 1,5 bar, würde sich die Kugel 31 entgegen der Federkraft nach oben bewegen und das Ventil öffnen.

Wie insbesondere aus Figuren 7, 3 und 8 hervorgeht, ist am Technikmodul 3, hier an dem L-förmigen Trägerelement 15 ein Dichtelement 107 vorgesehen, das in einem Bereich um das Überdruckventil 29 herum die Deckeloberseite gegen den Griff 2, d. h. hier gegen das Technikmodul 3 abdichtet. Das Dichtelement 107 weist hier eine Öffnung auf, über die dann der Dampf, der aus dem Überdruckventil austritt, gezielt insbesondere seitlich abgeleitet werden kann. So wird verhindert, dass der Dampf unkontrolliert nach oben in Richtung Technikmodul oder nach hinten in Richtung der Hand des Bedieners austritt. Der Dampf kann dann gezielt seitlich zwischen Abdeckmodul 4 und Deckel 1 austreten.

Wie aus den Figuren 6 und 8 hervorgeht, umfasst eine Restdrucksperre das Teil 27a, das durch den Druckanzeiger (Welle 7) derart mit angehoben wird, dass es die Öffnungsbewegung des Drehknopfes 5 durch Teil 22 verriegelt.

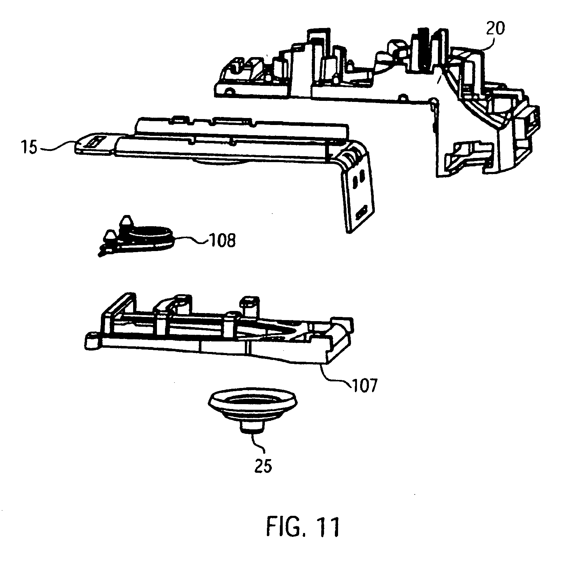

Figur 11 zeigt eine weitere Ausführungsform der vorliegenden Erfindung, die dem ersten in Zusammenhang mit den Figuren 1 bis 10 erläutertem Ausführungsbeispiel entspricht. Dieses Ausführungsbeispiel unterscheidet sich lediglich durch die Ausbildung des Dichtelements 107. Bei dem vorherigen Ausführungsbeispiel istdas Dichtelement 107 derart ausgebildet, dass der Dampf seitlich abgeleitet wird. Hier wird das Dichtelement 107 ebenfalls an der Unterseite des Technikmoduls 3, hier an dem L-förmigen Trägerelement 15, befestigt. Auch hier dichtet das Dichtelement 107 einen Bereich um das Überdruckventil 29 zwischen Deckeloberseite und Technikmodul, d. h. hier Trägerelement 15 ab. Die Öffnung, über die der Dampf abgeleitet wird, erstreckt sich nicht zur Seite sondern nach vorne, so dass Dampf gezielt am Vorderende des Griffs 2 zwischen Abdeckmodul 4 und Deckel 1 abgeleitet werden kann. Das Dichtelement hat, wie aus Figur 11 hervorgeht, dabei so lange Schenkel, dass der Dampf in einem Bereich im vorderen Drittel des Griffs 2 abgeleitet werden kann. Im zusammengebauten Zustand umgeben dabei die Schenkel des Dichtelements 107 die Dichtmanschette 108, so dass sowohl Dampf aus dem Arbeitsventil als auch aus dem Überdruckventil in eine Richtung nach vorne abgeleitet werden kann. Wie bereits erläutert, erlaubt der modulare Aufbau des Deckelstielgriffs 2 eine Variantenvielfalt, da das Abdeckmodul 4 nur die Funktion eines verkleidenden Elements hat und auf einfache Art und Weise austauschbar ist. Dadurch, dass beispielsweise das Technikmodul 3 für unterschiedliche Schnellkochtopfvarianten verwendet werden kann, vergünstigt und vereinfacht sich die Produktion unterschiedlicher Schnellkochtopfvarianten.

Insbesondere betrifft die vorliegende Erfindung auch ein System für unterschiedliche Schnellkochtopfvarianten, bei denen ein und dasselbe Technikmodul 3 verwendet werden kann, wobei jedoch unterschiedliche Varianten für das Abdeckmodul 4 vorgesehen sind, die sich in ihrer Form und/oder Farbe unterscheiden.

## Patentansprüche

1. Deckel (1) für einen Schnellkochtopf, mit einem abnehmbaren Deckelgriff, insbesondere Deckelstielgriff (2), mit
- einem Technikmodul (3), das für die Funktion des Schnellkochtopfs erforderliche bewegliche Funktionselemente (10, 11, 12, 13,14, 17) aufweist, und mit
- einem Abdeckmodul (4), das das Technikmodul (3) verkleidet, **dadurch gekennzeichnet, dass**
das Technikmodul mindestens eines der beweglichen Funktionselemente der folgenden Gruppe umfasst:
eine Druckanzeigeeinrichtung (10), eine Deckelverriegelung (17), ein bewegliches Dichtelement (11) eines Arbeitsventils (12) zum Einstellen unterschiedlicher Druckwerte im Schnellkochtopf, eine Druckfeder (13), insbesondere Drehstabfeder, die das bewegliche Dichtelement (11) mit einer verstellbaren Druckkraft beaufschlagt, und eine Einstelleinrichtung (14) zum Verändern der Druckkraft auf der Feder (13) auf das Dichtelement (11).

2. Deckel (1) nach Anspruch 1 **dadurch gekennzeichnet, dass** das Technikmodul (3) eine Befestigungseinrichtung (18) zum Befestigen des Deckelgriffs (2) am Deckel (1) aufweist.

3. Deckel (1) nach mindestens einem der Ansprüche 1 bis 2 **dadurch gekennzeichnet, dass** das Technikmodul (3) im Wesentlichen aus einem L-förmigen Trägerelement (15), vorzugsweise Trägerblech ausgebildet ist.

4. Deckel (1) nach mindestens einem der Ansprüche 1 bis 3 **dadurch gekennzeichnet, dass** das Technikmodul (3) das bewegliche Dichtelement (11) des Arbeitsventils (12) aufweist und der Ventilsitz (21) im Deckel (1) als separates oder angeformtes Ventilsitzteil ausgebildet ist.

5. Deckel (1) nach Anspruch 4 **dadurch gekennzeichnet, dass** der Ventilsitz (21) und/oder das Dichtelement (11) aus einem Feststoff, insbesondere aus einem Duroplast, Thermoplast, Harz oder Metall gebildet sind, wobei insbesondere der Ventilsitz (21) oder das Dichtelement (11) eine konusförmige Dichtfläche aufweisen.

6. Deckel (1) nach Anspruch 4 oder 5 **dadurch gekennzeichnet, dass** das Dichtelement (11) oder der Ventilsitz (21) eine kugelförmige Dichtfläche aufweist.

7. Deckel (1) nach mindestens einem der Ansprüche 1 bis 6 **dadurch gekennzeichnet, dass** das Abdeckmodul (3) aus einem Kunststoffteil ausgebildet ist, das an seiner Oberseite mindestens zwei Öffnungen für die Druckanzeigeeinrichtung (10) und die Einstelleinrichtung (14) zum Verändern der Druckkraft aufweist.

8. Deckel (1) nach mindestens Anspruch 1 **dadurch gekennzeichnet, dass** die Einstelleinrichtung (14) zum Verändern der Druckkraft auf das Dichtelement einen Drehmechanismus (22) umfasst, und insbesondere in Abhängigkeit der Drehbewegung ein Ende der Drehstabfeder (13) mit einer vorbestimmten Kraft beaufschlagt wird, derart, dass eine bestimmte Kraft von dem anderen Ende der Drehstabfeder (13) auf das Dichtelement ausgeübt wird.

9. Deckel (1) nach Anspruch 8 **dadurch gekennzeichnet, dass** auf den Drehmechanismus (22) ein Drehknopf (5) aufsetzbar ist.

10. Deckel nach mindestens einem der Ansprüche 1 bis 9 **dadurch gekennzeichnet, dass** das Abdeckmodul (4) auf das Technikmodul (3) aufsteckbar, insbesondere aufklippbar ist.

11. Deckel nach mindestens einem der Ansprüche 1 bis 10 **dadurch gekennzeichnet, dass** im Topfdeckel ein selbstreversierendes Überdruckventil (29) angeordnet ist.

12. Deckel nach mindestens einem der Ansprüche 1 bis 11 **dadurch gekennzeichnet, dass** um einen Bereich um das Überdurckventil (29) ein Dichtelement (107) vorgesehen ist, das die Deckeloberseite gegen das Technikmodul (3), insbesondere das L-förmige Trägerelement, abdichtet, und eine Öffnung aufweist, über die aus dem Überdruckventil austretender Dampf in eine seitliche Richtung und/oder nach vorne abgeleitet werden kann.

13. System mit Deckeln nach mindestens einem der Ansprüche 1 bis 12 **dadurch gekennzeichnet, dass** für ein bestimmtes Technikmodul (3) passende Abdeckmodule (4) unterschiedlicher Form und/oder Farbe vorgesehen sind.

## Claims

1. Lid (1) for a pressure cooker, with a removable lid handle, particularly a lid stem handle (2), with
- a technology module (3) that has the movable operational elements (10, 11, 12, 13, 14, 17) needed for the function of the pressure cooker, and with
- a masking module (4) that masks the technology module (3),
**characterised in that** the technology module comprises at least one of the movable operational elements of the following group:
a pressure display device (10); a lid lock (17); a movable sealing element (11) of a working valve (12) for selecting different pressure levels in the pressure cooker; a compression spring (13), in particular, a torsion bar spring, that acts upon the movable sealing element (11) with an adjustable compressive pressure; and an adjustment device (14) for changing the compressive pressure on the spring (13) on the sealing element (11).

2. Lid (1) according to Claim 1, **characterised in that** the technology module (3) has a fastening device (18) for fastening the lid handle (2) to the lid (1).

3. Lid (1) according to at least one of the Claims 1 to 2, **characterised in that** the technology module (3) is essentially formed from an L-shaped support element (15), preferably a support plate.

4. Lid (1) according to at least one of the Claims 1 to 3, **characterised in that** the technology module (3) has the movable sealing element (11) of the working valve (12) and the valve seat (21) is formed in the lid (1) as a separate or integrally moulded valve seat part.

5. Lid (1) according to Claim 4, **characterised in that** the valve seat (21) and / or the sealing element (11) are formed from a solid, in particular from a duroplast, thermoplast, resin or metal, wherein particularly the valve seat (21) or the sealing element (11) has a conical sealing surface.

6. Lid (1) according to Claim 4 or 5, **characterised in that** the sealing element (11) or the valve seat (21) has a spherical sealing surface.

7. Lid (1) according to at least one of the Claims 1 to 6, **characterised in that** the masking module (4) is formed from a plastic part that has at least two openings on its upper side for the pressure display device (10) and the adjustment device (14) for changing the compressive pressure.

8. Lid (1) according to at least Claim 1, **characterised in that** the adjustment device (14) for changing the compressive pressure on the sealing element comprises a rotating mechanism (22), and, particularly depending on the rotational movement, one end of the torsion bar spring (13) is acted upon with a pre-determined force in such a way that a certain force is exercised on the sealing element by the other end of the torsion bar spring (13).

9. Lid (1) according to Claim 8, **characterised in that** a rotary knob (5) can be placed upon the rotating mechanism (22).

10. Lid according to at least one of the Claims 1 to 9, **characterised in that** the masking module (4) can be attached, particularly clipped on, to the technology module (3).

11. Lid according to at least one of the Claims 1 to 10, **characterised in that** a self-reversing pressure-relief valve (29) is arranged in the cooker lid.

12. Cooker according to at least one of the Claims 1 to 11, **characterised in that** a sealing element (107) is provided around an area around the pressure-relief valve (29), wherein this sealing element seals the lid's upper side with respect to the technology module (3), in particular the L-shaped support element, and has an opening through which the steam escaping from the pressure-relief valve can be dissipated in a lateral direction and / or to the front.

13. System with lids in accordance with at least one of the Claims 1 to 12, **characterised in that** suitable masking modules (4) of different shapes and / or colours are provided for a certain technology module (3).

## Revendications

1. Couvercle (1) pour un autocuiseur avec une poignée de couvercle amovible, notamment une poignée-manche de couvercle (2), comprenant
- un module technique (3), qui présente des éléments fonctionnels mobiles (10, 11, 12, 13, 14, 17) nécessaires au fonctionnement de l'autocuiseur, et comprenant
- un module de recouvrement (4), qui habille le module technique (3),
**caractérisé en ce que**
le module technique englobe au moins l'un des éléments fonctionnels mobiles du groupe suivant :
un dispositif d'indication de la pression (10), un verrouillage de couvercle (17), un élément d'étanchéité mobile (11) d'une soupape de travail (12) pour le réglage de valeurs de pression différentes dans l'autocuiseur, un ressort de compression (13), notamment un ressort à barre de torsion, qui sollicite l'élément d'étanchéité mobile (11) avec une force de pression réglable, et un dispositif de réglage (14) pour faire varier la force de pression du ressort (13) sur l'élément d'étanchéité (11).

2. Couvercle (1) selon la revendication 1, **caractérisé en ce que** le module technique (3) présente un dispositif de fixation (18) pour fixer la poignée de couvercle (2) au couvercle (1).

3. Couvercle (1) selon l'une au moins des revendications 1 à 2, **caractérisé en ce que** le module technique (3) est réalisé sensiblement par un élément de support (15) en forme de L, de préférence une tôle de support.

4. Couvercle (1) selon l'une au moins des revendications 1 à 3, **caractérisé en ce que** le module technique (3) présente l'élément d'étanchéité mobile (11) de la soupape de travail (12), et le siège de soupape (21) dans le couvercle (1) est réalisée en tant que pièce de siège de soupape séparée ou réalisée par formage ou moulage.

5. Couvercle (1) selon la revendication 4, **caractérisé en ce que** le siège de soupape (21) et/ou l'élément d'étanchéité (11) sont réalisés en un matériau solide, notamment un thermodurcissable, un thermoplastique, une résine ou un métal, en particulier le siège de soupape (21) ou l'élément d'étanchéité (11) présentant une surface d'étanchéité de forme conique.

6. Couvercle (1) selon la revendication 4 ou la revendication 5, **caractérisé en ce que** l'élément d'étanchéité (11) ou le siège de soupape (21) présente une surface d'étanchéité de forme sphérique.

7. Couvercle (1) selon l'une au moins des revendications 1 à 6, **caractérisé en ce que** le module de recouvrement (4) est formé par une pièce en matière plastique, qui présente, sur son côté supérieur, au moins deux ouvertures destinées au dispositif d'indication de la pression (10) et au dispositif de réglage (14) pour faire varier la force de pression.

8. Couvercle (1) selon au moins la revendication 1, **caractérisé en ce que** le dispositif de réglage (14) pour faire varier la force de pression sur l'élément d'étanchéité (11), comprend un mécanisme de rotation (22), et **en ce que**, notamment en fonction du mouvement de rotation, une extrémité du ressort à barre de torsion (13) est sollicitée avec une force prédéterminée de façon telle, qu'une force déterminée soit exercée par l'autre extrémité du ressort à barre de torsion, sur l'élément d'étanchéité.

9. Couvercle (1) selon la revendication 8, **caractérisé en ce que** sur le mécanisme de rotation (22) peut être rapporté un bouton tournant (5).

10. Couvercle selon l'une au moins des revendications 1 à 9, **caractérisé en ce que** le module de recouvrement (4) peut être rapporté, notamment être encliqueté sur le module technique (3).

11. Couvercle selon l'une au moins des revendications 1 à 10, **caractérisé en ce que** dans le couvercle de récipient de cuisson est agencée une soupape de sureté (29), auto-réversible.

12. Couvercle selon l'une au moins des revendications 1 à 11, **caractérisé en ce qu'**autour d'une zone entourant la soupape de sureté (29), il est prévu un élément d'étanchéité (107), qui assure l'étanchéité du côté supérieur du couvercle par rapport au module technique (3), notamment l'élément de support en forme de L, et présente une ouverture par l'intermédiaire de laquelle de la vapeur sortant de la soupape de sureté peut être évacuée dans une direction latérale et/ou vers l'avant.

13. système comprenant des couvercles selon l'une au moins des revendications 1 à 12, **caractérisé en ce que** pour un module technique (3) déterminé, sont prévus des modules de recouvrement (4) de forme et/ou de couleur différentes.
